# EUROPÄISCHE PATENTSCHRIFT

(11) **EP 1 999 394 B1**
(45) Veröffentlichungstag und Bekanntmachung des Hinweises auf die Patenterteilung: **16.06.2010**
(21) Anmeldenummer: 07712312.3
(22) Anmeldetag: 23.02.2007
(51) Int. Cl.: F16D 65/14, F16D 65/56

(54) **BREMSE MIT SPINDEL UND KURVENSCHEIBEN-ANORDNUNG**
BRAKE WITH SPINDLE AND CAM DISK ARRANGEMENT
FREIN A BROCHE ET AGENCEMENT DE CAME

(30) Priorität: 17.03.2006 DE 102006012440
(43) Veröffentlichungstag der Anmeldung: 10.12.2008
(73) Patentinhaber: Continental Automotive GmbH, 30165 Hannover (DE)
(72) Erfinder: BAIER-WELT, Christian, 64372 Ober-Ramstadt (DE); BAUKHOLT, Theo, 65830 Kriftel (DE); POWILEIT, Hendrik, 61389 Schmitten (DE)
(86) Internationale Anmeldenummer: PCT/EP2007/051765
(87) Internationale Veröffentlichungsnummer: WO 2007/107427

(56) Entgegenhaltungen:
- WO-A-03/100282
- DE-A1- 19 850 923
- DE-A1- 19 853 721
- FR-A1- 2 849 136

## Beschreibung

Die Erfindung betrifft eine Bremse, insbesondere für Kraftfahrzeuge, gemäß dem Oberbegriff des Patentanspruches 1, insbesondere eine selbstverstärkende elektromechanische Bremse.

Die Problematik soll zunächst anhand von selbstverstärkenden elektromechanischen Bremsen erläutert werden, betrifft jedoch gleichermaßen auch herkömmliche elektrische Bremsen, bei denen die Gefahr besteht, dass sie sich nicht mehr öffnen. Dies kann der Fall sein, wenn die Bremse aufgrund eines Fehlers, beispielsweise eines Spindelbruchs sperrt. Weiterhin gibt es elektrische Bremsen, die alleine - aufgrund von im Fahrzeug oder in der Bremse gespeicherter Energie - schließen können.

Selbstverstärkende elektromechanische Bremsen umfassen üblicherweise einen elektrisch betätigten Aktuator, meist einen Elektromotor, der ein Reibglied mit einem Reibbelag gegen ein abzubremsendes Element, wie z.B. Bremsscheibe drückt bzw. davon löst. Bei einer Bremsbetätigung wird das Reibglied durch die kinetische Energie des abzubremsenden Elements mitgenommen und verstärkt die Bremswirkung selbsttätig (Selbstverstärkung).

Selbstverstärkende elektromechanische Bremsen sind typischerweise als Keilbremsen realisiert. Eine solche Keilbremse ist z.B. in der DE 198 19 564 C2 beschrieben und aus vielen anderen Druckschriften hinreichend bekannt. Das Keilelement ist in der Regel so dimensioniert, dass der Tangens des Keilwinkels α etwa einem zu erwartenden Reibwert µ zwischen Reibglied und abzubremsendem Element entspricht. In diesem Idealfall wird das Keilelement weder in den Spalt hineingezogen noch aus diesem herausgedrückt, so dass die vom Aktuator aufzubringende Kraft gleich Null ist. Bei ungünstigen, d.h. hohen Reibwerten zwischen Reibglied und abzubremsendem Element sind dagegen relativ hohe Zugkräfte vom Aktuator aufzubringen, um das Reibglied festzuhalten. Wenn der Aktuator in diesem Zustand ausfällt, wird das Reibglied ungehindert mitgenommen und die Bremse kann schlagartig blockieren. Im Falle einer Kfz-Radbremse muss dies in jedem Fall verhindert werden.

Um ein Blockieren der Bremse zu verhindern, sind verschiedene Notlösevorrichtungen aus dem Stand der Technik bekannt. Die bekannten Notlösevorrichtungen sind jedoch meist sehr kompliziert aufgebaut und benötigen eine größere Anzahl von Bauteilen.

Selbstverstärkende Bremsen umfassen vielfach auch eine Belagverschleiß-Nachstelleinrichtung, mit der das Lüftspiel zwischen Bremsbelag und Bremsscheibe, insbesondere bei abgefahrenen Bremsen, nachgestellt werden kann. Bekannte Nachstelleinrichtungen enthalten üblicherweise einen eigenen Aktuator, z. B. einen Elektromotor, und weitere Bauteile. Die gesamte Radbremse mit sämtlichen Zusatzeinrichtungen wird dadurch sehr komplex, aufwändig und teuer und benötigt relativ viel Bauraum.

Es ist daher die Aufgabe der vorliegenden Erfindung, eine Bremse, insbesondere eine Kfz-Radbremse, zu schaffen, die sowohl eine Belagverschleiß-Nachstelleinrichtung als auch eine Notlösevorrichtung umfasst, jedoch wesentlich einfacher aufgebaut ist und darüber hinaus relativ wenig Bauraum benötigt.

Gelöst wird diese Aufgabe gemäß der Erfindung durch die im Patenanspruch 1 angegebenen Merkmale. Weitere Ausgestaltungen der Erfindung sind Gegenstand von Unteransprüchen.

Ein wesentlicher Aspekt der Erfindung besteht darin, eine Bremse mit einer Nachstelleinrichtung auszustatten, die eine Spindel und ein von der Spindel betätigtes, verstellbares Element umfasst, und die Bremse zusätzlich mit einer Notlösevorrichtung zu versehen, die zwei relativ zueinander verdrehbare Kurvenscheiben umfasst, von denen eine drehfest mit der Spindel verbunden und die andere vorzugsweise axial drehbar gelagert ist. Die Belagverschleiß-Nachstelleinrichtung und die Notlösevorrichtung sind dabei seriell in einem Kraftflusspfad angeordnet. Eine solche Bremse hat den wesentlichen Vorteil, dass sie sehr wenige Bauteile umfasst, kostengünstig herzustellen ist und darüber hinaus relativ wenig Bauraum benötigt.

Das Nachstellen der Bremse erfolgt erfindungsgemäß durch Drehen der Spindel, wodurch das verstellbare Element angetrieben wird, das wiederum auf das Reibglied wirkt und dieses bezüglich der Reibfläche des abzubremsenden Elements verstellt.

Der Notlösevorgang erfolgt dagegen durch Verdrehen der beiden Kurvenscheiben. Die Kurvenscheiben sind erfindungsgemäß so ausgelegt, dass bei einer Betätigung der Bremse ein Drehmoment entsteht, das versucht, die beiden Kurvenscheiben gegeneinander zu verdrehen. Durch das Verdrehen der Scheiben ändert sich der Abstand der Scheiben. Diese Längenänderung wird über die Spindel, das verstellbare Element und gegebenenfalls weitere Bauteile auf das Reibglied übertragen. Bei geeigneter Auslegung der Scheiben und ausreichend hoher Zuspannkraft kann die Bremse im Falle einer Störung innerhalb weniger Millisekunden gelöst werden.

Die beiden Kurvenscheiben sind vorzugsweise derart ausgelegt, dass sie je nach Betriebsart entweder gemeinsam oder relativ zueinander verdrehbar sind. Die Belagverschleiß-Nachstelleinrichtung wird vorzugsweise dadurch betätigt, dass beide Kurvenscheiben gemeinsam gedreht werden. Die Notlösefunktion wird dagegen durch gegenseitiges Verdrehen der Scheiben bewirkt.

Spindel und Kurvenscheiben können sich im Kraftfluss der Zuspannkraft befinden, sind aber vorzugsweise in einem daraus abgeleiteten Kraftflusspfad angeordnet. Das Ableiten einer Kraft aus der Zuspannkraft hat den Vorteil, dass die Spindel und die Kurvenscheiben weniger stark belastet werden. Zum Ableiten der Kraft ist vorzugsweise ein Keilelement vorgesehen, das im Kraftfluss der Zuspannkraft angeordnet ist. Dieses Keilelement bildet vorzugsweise gleichzeitig das von der Spindel angetriebene Element.

Gemäß einer bevorzugten Ausführungsform der Erfindung wird nur eine der Kurvenscheiben angetrieben (die andere vorzugsweise nicht). Dies kann entweder die nicht mit der Spindel verbundene Scheibe oder die mit der Spindel verbundene Scheibe sein. Als Antrieb ist vorzugsweise ein Elektromotor vorgesehen. Bei dieser Auslegung der Bremse ist es möglich, die Notlösevorrichtung und die Nachstelleinrichtung gemeinsam mit einem einzigen Motor anzutreiben.

Die Kurvenscheiben sind vorzugsweise mit ihren Kurvenbahnen gegenüberliegend angeordnet. Die beiden Kurvenscheiben sind vorzugsweise identisch. Zwischen den Kurvenscheiben befinden sich vorzugsweise Wälzkörper. Letztere können beispielsweise kugelförmig oder walzenförmig ausgebildet sein.

Bei den Kurvenscheiben handelt es sich vorzugsweise um axiale Kurvenscheiben. Dies ermöglicht eine relativ kompakte Bauweise.

Die Kurvenbahnen der Scheiben sind vorzugsweise so ausgelegt, dass sie wenigstens eine Betriebsbremsposition und eine Notlöseposition definieren. In der Betriebsbremsposition befinden sich die Kurvenscheiben in einem mittleren Abstand zueinander, in der Notlöseposition dagegen in einem engen Abstand. Die Notlöseposition der Scheiben ist vorzugsweise so ausgelegt, dass die Bremse auch bei starker Betätigung nicht mehr gespannt werden kann.

Die Kurvenscheiben definieren vorzugsweise auch eine Parkbremsposition, in der sich die Kurvenscheiben in einem weiten Abstand zueinander befinden (weiter als in der Betriebsbremsposition). Die Parkbremsposition hat vorzugsweise die Form einer Art Rastmarke, an der kein gegeneinander verdrehendes Moment auf die Kurvenscheiben wirkt. Die Parkbremsposition ist daher stromlos selbst erhaltend.

Die Betriebsbremsposition ist vorzugsweise derart ausgelegt, dass bei Belastung ein geringes Drehmoment auf die Scheiben wirkt, das versucht, diese gegenseitig in Richtung der Löseposition zu verdrehen. Bei einem Ausfall der elektrischen Energieversorgung ist somit sichergestellt, dass sich die Scheiben automatisch in die Löseposition bewegen und sich die Bremse automatisch löst.

Die Steigung der Kurven in der Betriebsbremsposition ist vorzugsweise so gewählt, dass das durch die Zuspannkraft erzeugte Drehmoment wesentlich geringer ist, als das Losbrechmoment der Spindel. Dadurch wird gewährleistet, dass sich die Spindel bei einer Betriebsbremsung nicht bewegt. Die mit der Spindel verbundene Kurvenscheibe muss in diesem Fall nicht unbedingt gehalten werden.

Zwischen der Betriebsbremsbrems- und der Parkbremsposition befindet sich vorzugsweise ein Übergangssegment, das eine etwas größere Steigung hat als das Kurvensegment in der Betriebsbremsposition.

Die Steigung eines an die Parkbremsposition angrenzenden Kurvensegments ist vorzugsweise so gewählt, dass das auf die Spindel wirkende Drehmoment deutlich höher ist als das Losbrechmoment der Spindel. Die Spindel kann somit durch Antrieb einer der Kurvenscheiben betätigt werden.

Die Steigung eines zwischen der Betriebsbrems- und der Notlöseposition liegenden Kurvensegments ist vorzugsweise so gewählt, dass das auf die Spindel und die Kurvenscheibe ausgeübte Drehmoment wesentlich größer ist als in der Betriebsbremsposition. Das Lösen der Bremse wird somit beschleunigt, sobald das Wälzlager auf diesem Segment entlang läuft.

Gemäß einer speziellen Ausführungsform wird das Verdrehen der Kurvenscheiben in Richtung der Löseposition durch eine entsprechende Einrichtung unterstützt. Hierzu wird eine Vorspanneinrichtung vorgeschlagen, mittels der die beiden Kurvenscheiben in Richtung der Löseposition gegeneinander vorgespannt sind. Die Vorspanneinrichtung kann beispielsweise eines oder mehrere Federelemente umfassen, die die Kurvenscheiben gegeneinander vorspannen. Dadurch kann die Notauslösung der Bremse, insbesondere bei geringer Zuspannkraft, wesentlich beschleunigt werden.

Bei einer Bremsbetätigung wirkt ein variables Moment auf die Kurvenscheiben, das versucht diese zu verdrehen. Daher wird vorzugsweise eine Positionsregelung für wenigstens eine der Kurvenscheiben durchgeführt, um die Kurvenscheibe in der Betriebsbremsposition zu halten.

Die Nachstelleinrichtung umfasst vorzugsweise einen Keil, der von der Spindel angetrieben wird. Der Keil ist vorzugsweise im Kraftflusspfad der Zuspannkraft angeordnet und leitet die Zuspannkraft um, vorzugsweise quer zur Zuspannkraft.

Der Keil ist vorzugsweise auf einer Platte angeordnet und gleitet auf dieser in einer Vorwärts- bzw. Rückwärtsrichtung. Das Keilelement wirkt vorzugsweise mit einem Widerlager zusammen, das eine korrespondierende Keilfläche aufweist.

Bei derjenigen Ausführungsform der Bremse, bei der die nicht mit der Spindel verbundene Kurvenscheibe angetrieben wird, kann für die andere Kurvenscheibe eine Bremsvorrichtung vorgesehen sein. Dadurch wird sichergestellt, dass sich die Spindel nicht ungewollt dreht.

Bei derjenigen Ausführungsform der Bremse, bei der die mit der Spindel drehfest verbundene Kurvenscheibe angetrieben wird, kann ebenfalls eine Halte- bzw. Bremsvorrichtung für die andere Kurvenscheibe vorgesehen sein. Dadurch wird verhindert, dass sich die abgetriebene Kurvenscheibe ungewollt dreht, wenn die Scheibenanordnung durch die Zuspannkraft belastet wird.

Die genannte Halte- bzw. Bremsvorrichtung umfasst vorzugsweise einen Elektromagneten, der die abgetriebene Scheibe in einer vorgegebenen Position festhält. Bei einer Störung gibt er die abgetriebene Kurvenscheibe automatisch frei. Um diesen Vorgang zu unterstützen, kann z. B. eine Rückholfeder vorgesehen sein.

Insbesondere ist die Erfindung auf selbstverstärkende Bremsen anwendbar.

Die Erfindung wird nachstehend anhand der beigefügten Zeichnungen beispielhaft näher erläutert. Es zeigen:
Fig. 1 Eine schematische Seitenansicht einer selbstverstärkenden Keilbremse mit einer Nachstelleinrichtung und einer Notlösevorrichtung gemäß einer ersten Ausführungsform der Erfindung;
Fig. 2 Den Kurvenverlauf einer Kurvenscheibe von Fig. 1;
Fig. 3a) eine schematische Darstellung der Löseposition der Kurvenscheiben von Fig. 1;
Fig. 3b eine Seitenansicht der Kurvenscheiben von Fig. 1 in der Löseposition;
Fig. 4a eine schematische Darstellung der Betriebsbremsposition der Kurvenscheiben von Fig. 1;
Fig. 4b eine Seitenansicht der Kurvenscheiben von Fig. 1 in der Betriebsbremsposition;
Fig. 5a eine schematische Darstellung der Parkbremsposition der Kurvenscheiben von Fig. 1;
Fig. 5b eine Seitenansicht der Kurvenscheiben von Fig. 1 in der Parkbremsposition;
Fig. 6a eine Federanordnung zum gegenseitigen Verdrehen der Kurvenscheiben in der Betriebsbremsposition;
Fig. 6b die Federanordnung in der Parkbremsposition;
Fig. 7 eine schematische Seitenansicht einer selbstverstärkenden Bremse mit einer Nachstelleinrichtung und einer Notlösevorrichtung gemäß einer zweiten Ausführungsform der Erfindung.

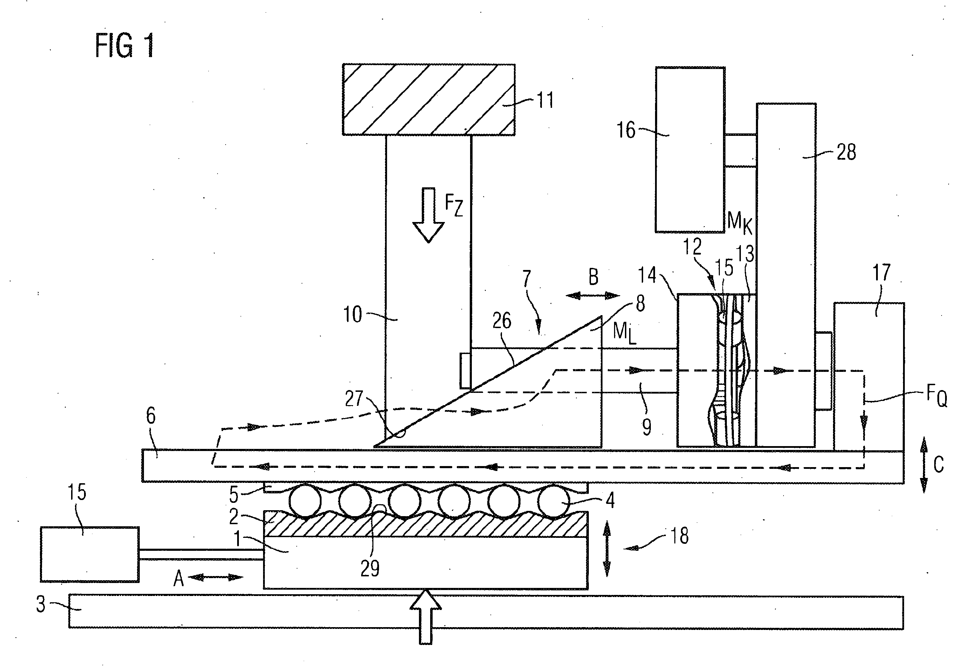

Fig. 1 zeigt eine schematische Seitenansicht einer selbstverstärkenden Bremse gemäß einer ersten Ausführungsform der Erfindung. Der eigentliche Bremsmechanismus ist dabei insgesamt mit dem Bezugszeichen 18 gekennzeichnet. Bei der hier dargestellten Bremse 18 handelt es sich um eine an sich bekannte Kfz-Radbremse mit einer beweglichen Keilplatte 2, die von einem Aktuator 15 in Richtung des Pfeils A bewegbar ist, um die Bremse festzuziehen oder zu lösen.

Die bewegliche Keilplatte 2 umfasst an ihrer Vorderseite (unten) einen Bremsbelag 1, der gegen die Reibfläche einer Bremsscheibe 3 wirkt. An der Rückseite der Keilplatte 2 sind mehrere Keilflächen 29 vorgesehen, die sich über dazwischen liegende Wälzlager 4 an einer gegenüberliegenden Keilfläche 5 abstützen. Die gegenüberliegende Keilfläche 5 ist auf einer Druckplatte 6 angeordnet.

Bei einer Betätigung der Bremse 18 bewegt sich die Keilplatte 2 mit dem Bremsbelag 1 entlang einer durch die Keilflächen 5, 29 vorgegebenen Bewegungsbahn, parallel und senkrecht zur Bremsscheibe 3. Die Wälzlager 4 dienen dabei insbesondere zur Verminderung der Gleitreibung. Die bewegliche Keilplatte 2 wird bei Annäherung an die Bremsscheibe 3 von dieser mitgenommen und drückt somit noch stärker gegen die Bremsscheibe 3 (Selbstverstärkung).

Die dargestellte Keilbremse ist mit einer Nacheinstelleinrichtung und einer Notlösevorrichtung ausgestattet, die hier jeweils als Ganzes mit den Bezugszeichen 7 bzw. 12 bezeichnet sind. Die Nachstelleinrichtung 7 dient, wie Eingangs erwähnt, zum Nachstellen des Lüftspiels, insbesondere bei abgefahrenen Bremsen. Die Notlösevorrichtung dient dagegen zum schnellen Lösen der Bremse im Falle einer Störung, wie z. B. einem Stromausfall.

Die Nachstelleinrichtung 7 umfasst im Wesentlichen einen Keil 8 und eine Spindel 9. Der Keil 8 hat ein Innengewinde (nicht gezeigt) und kann durch Drehung der Spindel 9 in Richtung des Pfeils B, parallel zur Druckplatte 6 verstellt werden. Die Keilfläche 26 des Keils 8 gleitet dabei an einer korrespondierenden Keilfläche 27 eines Widerlager-Elements 10 entlang, das sich am Bremssattel 11 abstützt. Bei einer Keil-Betätigung bewegen sich die Druckplatte 6 und sämtliche damit verbundenen Elemente (16,17,13,14,28) in Richtung des Pfeils C in Richtung der Bremsscheibe 3 bzw. von dieser weg. Durch Drehen der Spindel 9 kann somit das Lüftspiel zwischen Bremsbelag 1 und Bremsscheibe 3 nach Wunsch eingestellt werden.

Die Keil-Anordnung dient auch dazu, einen Teil der Zuspannkraft F_{Z} quer zur Zuspannkraft F_{Z} umzulenken. Die abgeleitete Kraft F_{Q} wird durch die Spindel 9 und die Notlösevorrichtung 12 in ein zweites Widerlager 17 geleitet, das mit der Druckplatte 6 fest verbunden ist. Die gesamte Anordnung, bestehend aus der Nachstelleinrichtung 7, Notlösevorrichtung 12 und einem motorischen Antrieb 16,28 bewegt sich daher in Richtung des Pfeils C.

Die Notlösevorrichtung 12 umfasst zwei Kurvenscheiben 13, 14, die sich mit ihren Kurvenflächen 19 gegenüberstehen. Zwischen den beiden Kurvenscheiben 13, 14 sind mehrere Wälzlager 15 angeordnet, die von einem Käfig gehalten werden. Im dargestellten Ausführungsbeispiel werden axiale Kurvenscheiben eingesetzt. Wahlweise könnten aber auch radiale Kurvenscheiben verwendet werden.

Die in der Figur links dargestellte Kurvenscheibe 14 ist drehfest mit der Spindel 9 verbunden. Die andere Kurvenscheibe 13 ist drehbar am Widerlager 17 gelagert und wird von einem Elektromotor 16 über einen Riemen 28 angetrieben.

Die beiden Kurvenscheiben 13, 14 können je nach Betriebsart entweder gegeneinander oder gemeinsam, d.h. synchron gedreht werden. Wenn sich die beiden Kurvenscheiben 13, 14 gegeneinander verdrehen, ändert sich der Abstand der Scheiben zueinander. Diese Längenänderung wird über die Spindel 9, den Keil 8 und die Druckplatte 6 auf das Keilelement 2 mit dem Bremsbelag 1 übertragen. Wenn die beiden Kurvenscheiben 13, 14 dagegen gleichzeitig gedreht werden, wird die Nachstelleinrichtung 7 betätigt und damit das Lüftspiel verstellt.

Die Kurvenscheiben 13, 14 haben einen charakteristischen Kurvenverlauf mit verschiedenen Kurvensegmenten, die verschiedene Betriebszustände der Bremse, nämlich insbesondere eine Betriebsbremsposition, eine Notlöseposition und eine Parkbremsposition definieren. Die einzelnen Kurvensegmente kommen jeweils im entsprechenden Betriebszustand der Bremse zum Einsatz.

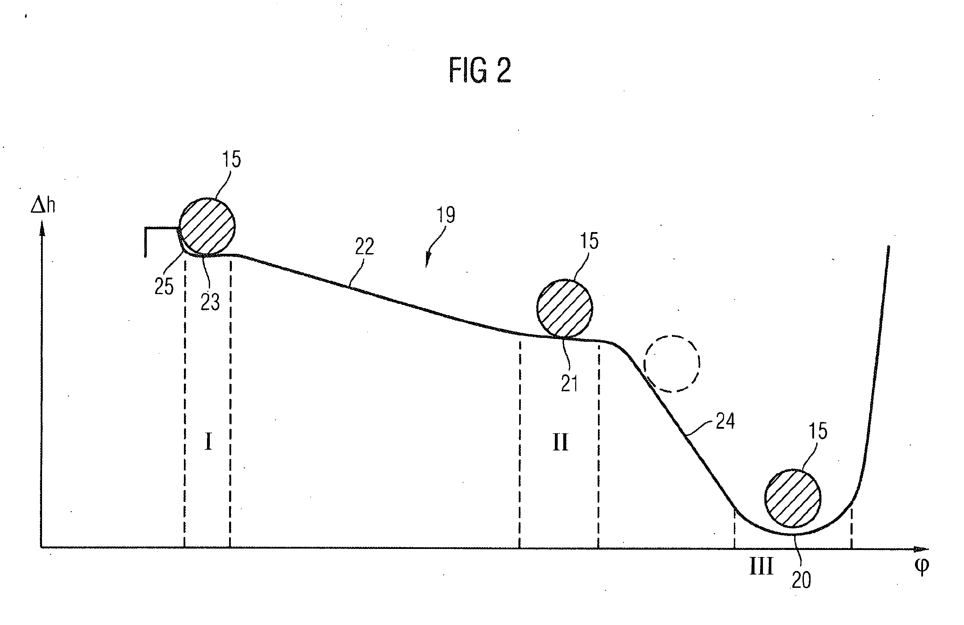

Figur 2 zeigt beispielhaft einen Kurvenverlauf 19 einer der Kurvenscheiben 13 bzw. 14. Wie zu erkennen ist, umfasst der Kurvenverlauf 19 mehrere Segmente 20-25, die in verschiedenen Betriebsarten der Bremse 18 zum Einsatz kommen. Dieser Kurvenverlauf 19 wiederholt sich mehrmals periodisch entlang des Umfangs einer Kurvenscheibe 13, 14, wobei jeder Periode ein Wälzkörper 15 zugeordnet ist. (Im vorliegenden Beispiel sind allerdings mehrere Wälzkörper 15 dargestellt, um die wichtigsten Betriebspositionen der Kurvenscheiben 13, 14 zu kennzeichnen.) Die wesentlichen Positionen sind eine Parkbremsposition I, eine Betriebsbremsposition II und eine Notlöseposition III.

Im Normalbetrieb sind sich die Kurvenscheiben 13, 14 in der Betriebsbremsposition II angeordnet. Das Wälzlager 15 befindet dabei auf einem Segment 21, das in Richtung der Notlöseposition III geneigt ist. Die Steigung dieses Segments 21 ist so gewählt, dass das bei axialer Belastung auf die Kurvenscheiben 13, 14 wirkende Drehmoment wesentlich geringer ist als das Losbrechmoment der Spindel 9. Dadurch wird verhindert, dass sich die Spindel 9 bei einem Bremsvorgang dreht. Die Steigung des Segments 21 kann beispielsweise etwa 1° betragen. Um die Kurvenscheibe 13 bei einer Betätigung der Bremse 18 in der Betriebsbremsposition II zu halten, wird vorzugsweise eine Positionsregelung durchgeführt.

Um von der Betriebsbremsposition II in die Parkbremsposition I zu gelangen, wird die Kurvenscheibe 13 vom Motor 16 entsprechend angetrieben. Das Wälzlager 15 läuft dabei über ein Kurvensegment 22 in die Parkbremsposition I. Durch die Bewegung vergrößert sich der Abstand der Kurvenscheiben 13, 14, wodurch die Bremse 18 zunehmend gespannt wird. Das Segment 22 hat eine etwas größere Steigung als das Segment 21, die z. b. 1,2° betragen kann. Die Steigung des Übergangssegments 22 ist relativ unkritisch, es sollte jedoch gewährleistet sein, dass der Wälzkörper 15 im Verlauf der Zuspannbewegung in die Parkbremsposition gelangen kann.

In der Parkbremsposition I ist das zugehörige Segment 23 der Kurve 19 derart ausgebildet, dass im wesentlichen kein Drehmoment auf die Kurvenscheiben 13, 14 wirkt. Das Kurvensegment 23 hat die Form eines energetischen Minimums bzw. einer Art Rastmarke, in der das Wälzlager 15 rasten kann. Ein an die Parkbremsposition I angrenzendes Kurvensegment 25 hat dagegen eine so hohe Steigung, dass das Losbrechmoment der Spindel 9 deutlich überschritten wird und sich die Spindel 9. dreht, wenn die Kurvenscheibe 13 vom Motor 16 angetrieben wird. Dadurch können die beiden Scheiben 13, 14 gemeinsam gedreht werden. Das Kurvensegment 25 bildet hier quasi einen Anschlag für den Wälzkörper 15.

Die Betriebsbremsposition II geht auf der anderen Seite in eine Notlöseposition III über. Das zugehörige Segment 20 hat die Form eines energetischen Minimums. In diesem Zustand ist der Abstand der Kurvenscheiben 13, 14 minimal, so dass der Keil 8 (siehe Figur 1) weit nach rechts wandern kann und die Bremse 18 vollständig frei gibt. Die Kontur des Segments 20 ist vorzugsweise so ausgelegt, dass die Bremse 18 auch bei maximaler Betätigung nicht mehr gespannt werden kann.

Die Notauslösung der Bremse 18 geschieht im Wesentlichen wie folgt: bei einem Stromausfall kann der Motor 16 die Scheibe 13 nicht mehr halten, so dass sich die Scheibe 13 gegenüber der Kurvenscheibe 14 automatisch in die Notlöseposition III verdreht. Das Wälzlager 15 rollt dabei über das Segment 24 in die Notlöseposition III. Dies kann innerhalb weniger Millisekunden geschehen. Die Steigung des Segments 24 ist dabei so gewählt, dass der Übergang in die Notlöseposition III sehr schnell abläuft. Sie kann z. B. 25° betragen.

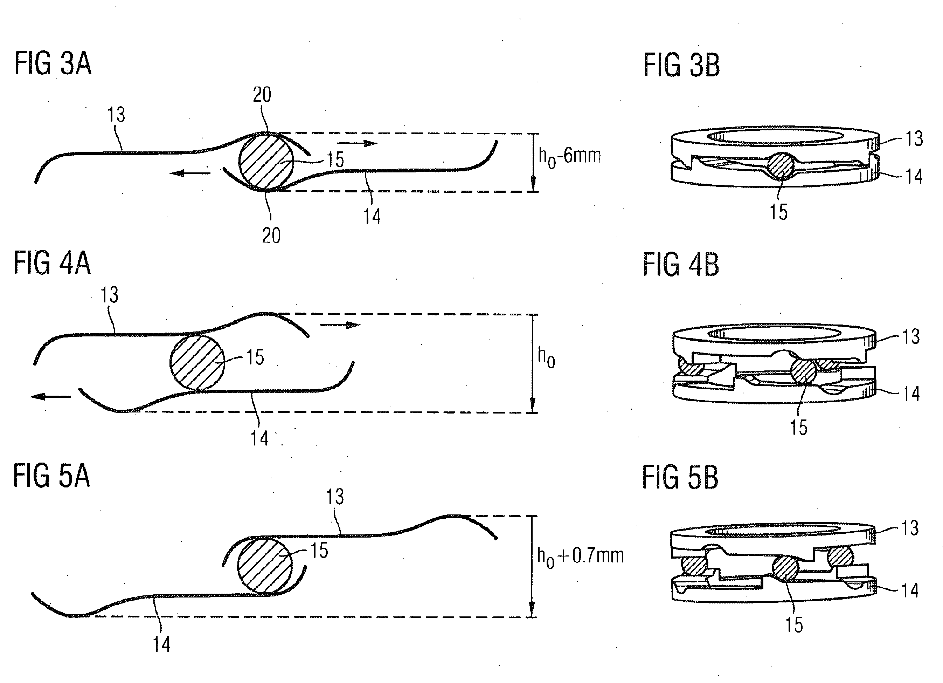

Die Figuren 3 bis 5 zeigen die Stellung der Kurvenscheiben 13, 14 in den einzelnen Positionen I bis III. Dabei ist in Figur 3a zunächst die Notlöseposition III dargestellt. Wie zu erkennen ist, befindet sich der Wälzkörper 15 zwischen gegenüberliegenden Notlöse-Segmenten 20 der Kurvenscheiben 13, 14. Der Abstand h der Kurvenscheiben 13, 14 ist dabei minimal und etwa 6mm geringer als in der Betriebsbremsposition II (Fig. 4a).

Figur 3b zeigt eine zugehörige Seitenansicht der Kurvenscheiben 13, 14, in der sich die Kurvenscheiben in der Notlöseposition III befinden.

Figur 4a zeigt die Betriebsbremsposition II der Kurvenscheiben 13, 14, in der sich die Wälzkörper 15 an gegenüberliegenden Segmenten 21 befinden. Der Abstand h ist hier mit dem Wert h₀ bezeichnet und um einige Millimeter größer als in der Notlöseposition von Figur 3a.

Figur 4b zeigt eine zugehörige Seitenansicht der Kurvenscheiben 13, 14, in der sich die Kurvenscheiben in der Betriebsbremsposition II befinden.

Figur 5a zeigt die Parkbremsposition III der Kurvenscheiben 13, 14. Die Wälzkörper 15 befinden sich zwischen gegenüberliegenden Kurvenabschnitten 23. Im Vergleich zur Darstellung von Figur 4a hat sich der Abstand h der beiden Kurvenscheiben 13, 14 nochmals um einige Millimeter vergrößert.

Figur 5b zeigt eine zugehörige Seitenansicht der Kurvenscheiben 13, 14, in der sich die Kurvenscheiben in der Parkbremsposition I befinden.

Bei der Ausführungsform von Figur 1, bei der die nicht mit der Spindel 9 verbundene Kurvenscheibe 13 angetrieben wird, muss im Störfall das Trägheits- und Reibmoment des Motors 16 einschließlich Getriebe 28 überwunden werden, damit sich die Kurvenscheibe 13 von der Betriebsbremsposition II in die Notlöseposition III bewegt. Wegen der geringen Steigung der Kurve 19 in der Betriebsbremsposition (Segment 21) kann das hierzu notwendige Moment M_{K} insbesondere bei einer nur wenig oder gar nicht belasteten Bremse 18 möglicherweise nicht erreicht werden. Es ist daher eine Vorrichtung vorgesehen, mittels der die Drehbewegung der Kurvenscheibe 13 in die Notlöseposition III unterstützt wird.

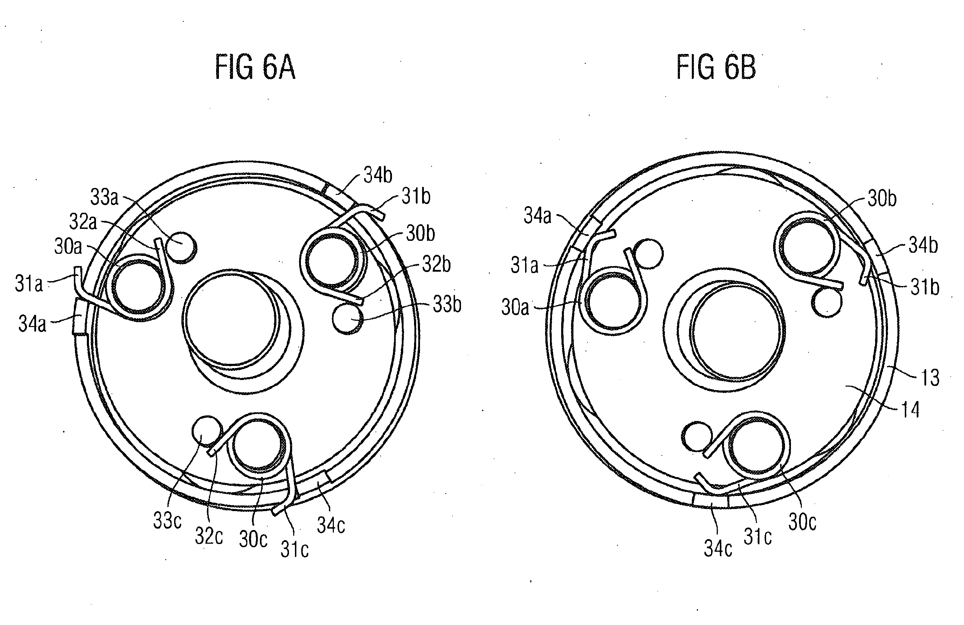

Die Figuren 6a und 6b zeigen eine Vorspanneinrichtung, die mehrere Federn 30a-30c umfasst. Die Federelemente 30a-30c sind an einer Stirnseite der abgetrieben Kurvenscheibe 14 angeordnet. Jedes Federelement 30a-30c umfasst einen ersten Schenkel 31a-31c, der an der angetriebenen Kurvenscheibe 13 angreift, sowie einen zweiten Schenkel 32a-32c, der an der abgetriebenen Kurvenscheibe 14 angreift. Die ersten Schenkel 31a-31c stützen sich dabei gegen Vorsprünge 34a-34c, die an der angetriebenen Kurvenscheibe 13 vorgesehen sind und dort in Axialrichtung der Spindel 9 vorstehen.

In der Betriebsbremsposition II sind die Federelemente 30a-30c vorgespannt und üben ein Drehmoment in Richtung der Notlöseposition III aus. Wenn der Motor 16 ausfällt, wird dadurch die Bewegung der Kurvenscheiben 13, 14 in die Notlöseposition unterstützt.

Figur 6b zeigt die Federanordnung in der Parkbremsposition I. In diesem Fall haben sich die beiden Kurvenscheiben 13, 14 so weit gegeneinander verdreht, dass sich die ersten Schenkel 31a-31c der Federelemente 30a-30c so weit nach innen gebogen haben, dass sie an einer Innenseite der Vorsprünge 34a-34c anliegen. In dieser Position üben sie kein Drehmoment mehr auf die Kurvenscheiben 13, 14 aus.

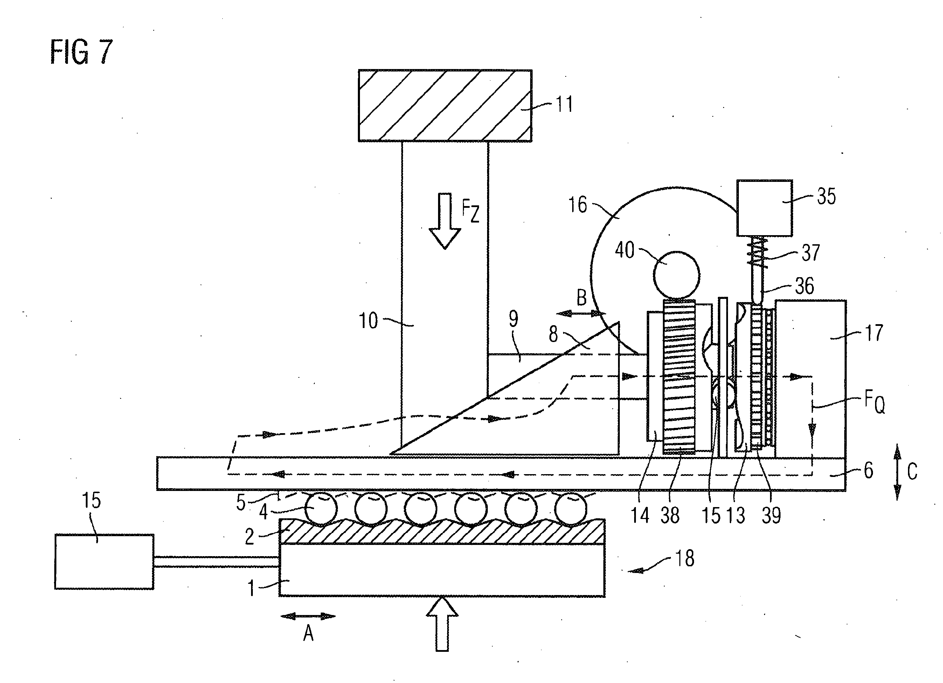

Figur 7 zeigt eine schematische Darstellung einer selbstverstärkenden Keilbremse, die ähnlich wie in Figur 1 aufgebaut ist, bei der jedoch die mit der Spindel 9 drehfest verbundene Kurvenscheibe 14 motorisch angetrieben wird. Die andere Kurvenscheibe 13 ist hier drehbar gelagert und wird nicht angetrieben. Um zu verhindern, dass sich die nicht angetriebene Kurvenscheibe 13 bei einer Betätigung der Bremse dreht, ist ein Elektromagnet 35 als Haltemittel vorgesehen, der die Kurvenscheibe 13 im bestromten Zustand hält. Der Elektromagnet 35 umfasst einen Bolzen 36, der in korrespondierende Ausnehmungen 39 der Kurvenscheibe 13 eingreift. Der Bolzen 36 ist mittels einer Feder 37 in Richtung der zurückgezogenen Position vorgespannt. Bei einer Störung, insbesondere einem Stromausfall, wird der Bolzen 36 mittels der Rückholfeder 37 sehr schnell aus der Raststellung zurückgezogen und gibt die Kurvenscheibe 13 frei. Die Kurvenscheibe 13 kann sich innerhalb weniger Millisekunden in die Notlöseposition verdrehen und die Bremse 18 freigeben.

Zum Aktivieren der Parkbremsfunktion wird die linke Kurvenscheibe 14 vom Motor 16 angetrieben und so lange verdreht, bis sich die Kurvenscheiben 13, 14 in der Parkbremsposition I befinden. Durch weiteres Drehen der Scheiben - wobei sich beide Kurvenscheiben 13, 14 synchron drehen - kann die Bremse 18 stärker gespannt werden. Die nicht angetriebene Kurvenscheibe 13 wird in diesem Fall vom Elektromagneten 35 freiegeben, um eine Drehung zu ermöglichen.

Der Antrieb der Kurvenscheibe 14 umfasst im vorliegenden Ausführungsbeispiel einen Motor 16 mit nur einem einzigen Getriebe, das vorzugsweise als Schneckengetriebe 38, 40 realisiert ist. Die Welle 40 des Motors 16 ist dabei mit einem Schneckengewinde versehen, das in eine entsprechende Verzahnung 38 am Außenumfang der Kurvenscheibe 14 eingreift. Ein Vorteil dieser Ausführungsform gegenüber derjenigen von Figur 1 besteht insbesondere darin, dass sich im Falle einer Störung allein die abgetriebene Kurvenscheibe 13 drehen muss. Die Notauslösung ist wegen des geringen Trägheitsmoments der Kurvenscheibe 13 wesentlich schneller als in der Ausführungsform von Figur 1, in der auch das Getriebe 28 und der Motor 16 gedreht werden müssen, um die Bremse zu lösen.

Eine zusätzliche Unterstützung der Notauslösung durch eine Vorspanneinrichtung, wie sie beispielhaft in den Figuren 6a, 6b dargestellt ist, kann hier auch vorgesehen sein, ist aber nicht unbedingt erforderlich.

Wie bereits eingangs dargelegt, ist eine Anwendung der Erfindung nicht nur für selbstverstärkende Bremsen möglich, sondern auch für beliebige elektrische Bremsen, die aufgrund eines Fehlers nicht mehr selbständig öffnen oder aufgrund von in der Bremse oder im Fahrzeug gespeicherter Energie selbst schließen können. Ein Beispiel für letztere Gruppe ist folgende Bremse deren Aufbau beschrieben wird:

Ausgehend von einer elektromechanischen Bremse mit einem abzubremsenden Glied, wenigstens einem Reibbelag zum reibschlüssigen Eingriff mit dem abzubremsenden Glied, und einem elektrischen Aktuator zum Bewegen des Reibbelages in reibschlüssigen Eingriff mit dem abzubremsenden Glied ist weiterhin ein betriebsmäßig mit dem elektrischen Aktuator gekoppelten, reversiblen Kraftspeicher vorgesehen, der so mit einer Kraftübersetzungseinrichtung zusammenwirkt, dass bei einer mittels des Aktuators erfolgenden Betätigung der Bremse die im Kraftspeicher gespeicherte Kraft mit zunehmendem Betätigungsweg des Aktuators sukzessive an die Kraftübersetzungseinrichtung abgegeben und von dieser in ein Betätigungsmoment umgesetzt wird, das mittelbar oder unmittelbar auf den Reibbelag übertragen wird, wobei das Betätigungsmoment mit zunehmendem Betätigungsweg des Aktuators auf vorgegebene Weise ansteigt, und dass bei einem Lösen der Bremse eine über den Reibbelag auf die Kraftübersetzungseinrichtung zurückwirkende, bremseninhärente Rückstellkraft den Kraftspeicher wieder auflädt. Auch auf eine solche Bremse als Bremse, die selbst aufgrund im Fahrzeug gespeicherter Energie schließen kann, wäre das in der Anmeldung vorgeschlagene Konzept anwendbar.

### Bezugszeichenliste

- 1: Bremsbelag
- 2: Keilplatte
- 3: Bremsscheibe
- 4: Wälzlager
- 5: Keilfläche
- 6: Druckplatte
- 7: Nachstelleinrichtung
- 8: Keil
- 9: Spindel
- 10: Widerlager mit Keilfläche
- 11: Bremssattel
- 12: Notlösevorrichtung
- 13: erste Kurvenscheibe
- 14: zweite Kurvenscheibe
- 15: Bremsen-Aktuator
- 16: Elektromotor
- 17: Widerlager
- 18: Keilbremse
- 19: Kurvenlinie
- 20: Kurvensegment der Notlöseposition
- 21: Kurvensegment der Betriebsbremsposition
- 22: Kurvensegment zum Spannungsaufbau
- 23: Kurvensegment der Parkbremsposition
- 24: kurvensegment einer Nachstellposition
- 25: Anschlag
- 26: Keilfläche des Keils 8
- 27: Keilfläche des Widerlagers 10
- 28: Zahnriemen
- 29: Keilfläche
- 30: Federelement
- 31: erster Schenkel
- 32: zweiter Schenkel
- 33: Anschlag
- 34: Vorsprung
- 35: Elektromagnet
- 36: Bolzen
- 37: Rückholfeder
- 38: Umfangsverzahnung der Kurvenscheibe 14
- 39: Ausnehmungen der Kurvenscheibe 13
- 40: Welle mit Schneckengetriebe
- A: Bewegungsrichtung der Keilplatte 2
- B: Bewegungsrichtung des Keils 8
- C: Bewegungsrichtung der Druckplatte 6
- F_{Z}: Zuspannkraft
- F_{Q}: abgeleitete Kraft
- I: Parkbremsposition
- II: Betriebsbremsposition
- III: Notlöseposition
- h: Abstand der Kurvenscheiben 13, 14
- ϕ: Winkel

## Patentansprüche

1. Bremse, insbesondere für Kraftfahrzeuge, mit einem Reibglied (1), das mittels eines Aktuators (15) gegen die Reibfläche eines abzubremsenden Elements (3) gedrückt bzw. davon gelöst werden kann,
**gekennzeichnet durch,**
- eine Nachstelleinrichtung (7), die eine Spindel (9) und ein von der Spindel (9) angetriebenes, verstellbares Element (8) umfasst, und
- eine Notlösevorrichtung (12) mit zwei relativ zueinander verdrehbaren Kurvenscheiben (13, 14), von denen eine (14) drehfest mit der Spindel (9) verbunden ist.

2. Bremse nach Anspruch 1,
**dadurch gekennzeichnet,**
**dass** die Nachstelleinrichtung (7) und die Notlösevorrichtung (12) in einem Kraftflusspfad der Zuspannkraft (F_{Z}) oder einer daraus abgeleiteten Kraft (F_{Q}) seriell angeordnet sind.

3. Bremse nach Anspruch 1 oder 2,
**dadurch gekennzeichnet,**
**dass** eine der Kurvenscheiben (13, 14) motorisch angetrieben wird.

4. Bremse nach Anspruch 3,
**dadurch gekennzeichnet,**
**dass** die nicht mit der Spindel (9) verbundene Kurvenscheibe (13) angetrieben wird.

5. Bremse nach Anspruch 3,
**dadurch gekennzeichnet,**
**dass** die mit der Spindel (9) verbundene Kurvenscheibe (14) angetrieben wird.

6. Bremse nach einem der vorhergehenden Ansprüche,
**dadurch gekennzeichnet,**
**dass** die nicht mit der Spindel (9) verbundene Kurvenscheibe (13) drehbar gelagert ist.

7. Bremse nach einem der vorhergehenden Ansprüche,
**dadurch gekennzeichnet,**
**dass** die Kurvenscheiben (13, 14) eine Notlöseposition (III) aufweisen, in der sich die Kurvenscheiben (13, 14) in einem engen Abstand zueinander befinden.

8. Bremse nach einem der vorhergehenden Ansprüche,
**dadurch gekennzeichnet,**
**dass** die Kurvenscheiben (13, 14) eine Betriebsbremsposition (II) aufweisen, in der sich die Kurvenscheiben (13, 14) in einem mittleren Abstand zueinander befinden.

9. Bremse nach einem der vorhergehenden Ansprüche,
**dadurch gekennzeichnet,**
**dass** die Kurvenscheiben (13, 14) eine Parkbremsposition (I) aufweisen, in der sich die Kurvenscheiben (13 14) in einem weitem Abstand zueinander befinden.

10. Bremse nach einem der vorhergehenden Ansprüche,
**dadurch gekennzeichnet,**
**dass** zwischen den Kurvenscheiben (13, 14) Wälzkörper (15) vorgesehen sind.

11. Bremse nach einem der vorhergehenden Ansprüche,
**dadurch gekennzeichnet,**
**dass** die Kurvenscheiben (13, 14) axiale Kurvenscheiben sind.

12. Bremse nach Anspruch 8,
**dadurch gekennzeichnet,**
**dass** in der Betriebsbremsposition (21) der Kurvenscheiben (13, 14) ein Drehmoment (M_{K}) wirkt, das ein gegenseitiges Verdrehen der Kurvenscheiben (13, 14) in Richtung der Notlöseposition (III) bewirken möchte.

13. Bremse nach Anspruch 9,
**dadurch gekennzeichnet,**
**dass** in der Parkbremsposition (II) kein Drehmoment (M_{K}) wirkt, das ein gegenseitiges Verdrehen der Kurvenscheiben (13, 14) bewirken möchte.

14. Bremse nach einem der vorhergehenden Ansprüche,
**dadurch gekennzeichnet,**
**dass** die Steigung der Kurvenscheibe (13, 14) in der Betriebsbremsposition (II) so ausgelegt ist, dass das durch die Zuspannkraft (F_{Z}) erzeugte Moment (M_{K}) wesentlich geringer ist als das Losbrechmoment (M_{L}) der Spindel (9).

15. Bremse nach einem der vorhergehenden Ansprüche,
**dadurch gekennzeichnet,**
**dass** die Steigung eines an die Parkbremsposition (I) angrenzenden Kurvensegments (25) so gewählt ist, dass das durch die Kurvenscheiben (13, 14) erzeugte Moment deutlich höher ist als das Losbrechmoment (M_{L}) der Spindel (9).

16. Bremse nach einem der vorhergehenden Ansprüche,
**dadurch gekennzeichnet,**
**dass** die Steigung eines an die Notlöseposition (III) angrenzenden Kurvensegments (24) so gewählt ist, dass das durch die Kurvenscheiben (13, 14) erzeugte Moment (M_{K}) größer ist, als das Losbrechmoment (M_{S}) der Spindel (9).

17. Bremse nach einem der vorhergehenden Ansprüche,
**dadurch gekennzeichnet,**
**dass** eine Vorspanneinrichtung (30a-30c) vorgesehen ist, mittels der die beiden Kurvenscheiben (13, 14) in Richtung der Notlöseposition (III) gegeneinander vorgespannt sind.

18. Bremse nach Anspruch 17,
**dadurch gekennzeichnet,**
**dass** die Vorspanneinrichtung wenigstens ein Federelement (30a-30c) umfasst.

19. Bremse nach einem der vorhergehenden Ansprüche,
**dadurch gekennzeichnet,**
**dass** in der Betriebsbremsposition (II) eine Positionsregelung für die Scheibenposition durchgeführt wird.

20. Bremse nach einem der vorhergehenden Ansprüche,
**dadurch gekennzeichnet,**
**dass** die Nachstelleinrichtung (7) ein Keilelement (8) umfasst, mittels dem die Zuspannkraft (F_{Z}) der Bremse umgelenkt wird.

21. Bremse nach Anspruch 20,
**dadurch gekennzeichnet,**
**dass** das Keilelement (8) auf einer Platte (6) gleitet.

22. Bremse nach Anspruch 20,
**dadurch gekennzeichnet,**
**dass** das Keilelement (8) mit einem Widerlager-Element (10) zusammenwirkt, das ebenfalls eine Keilfläche (27) aufweist.

23. Bremse nach Anspruch 4 oder 5,
**dadurch gekennzeichnet,**
**dass** eine Halte- bzw. Bremsvorrichtung (35,36) für die nicht angetriebene Kurvenscheiben (13,14) vorgesehen ist.

24. Bremse nach Anspruch 23,
**dadurch gekennzeichnet,**
**dass** die Halte- bzw. Bremsvorrichtung (35,36) einen Elektromagneten (35) umfasst.

25. Bremse nach einem der vorhergehenden Ansprüche,
**dadurch gekennzeichnet,**
**dass** nur ein einziger Motor (16) zur Betätigung der Nachstelleinrichtung (7) als auch der Notlösevorrichtung (12) vorgesehen ist.

26. Bremse nach einem der vorhergehenden Ansprüche,
**dadurch gekennzeichnet,**
**dass** die Bremse eine selbstverstärkende Bremse ist.

27. Bremse nach einem der vorhergehenden Ansprüche,
**dadurch gekennzeichnet,**
**dass** der vorgesehene Aktuator (15) ein elektrischer Aktuator ist.

## Claims

1. Brake, in particular for motor vehicles, comprising a friction member (1) which can, by means of an actuator (15),
be pressed against or released from the friction face of an element (3) which is to be braked,
**characterised by**
- a readjustment device (7) which comprises a spindle (9) and an adjustable element (8) which is driven by the spindle (9), and
- an emergency release device (12) having two cam disks (13, 14) which are rotatable relative to one another, one of which cam disks (14) is rotationally fixedly connected to the spindle (9).

2. Brake according to claim 1,
**characterised in that**
the readjustment device (7) and the emergency release device (12) are arranged serially in a force flux path of the application force (F_{Z}) or of a force (F_{Q}) derived therefrom.

3. Brake according to claim 1 or 2,
**characterised in that**
one of the cam disks (13, 14) is motor-driven.

4. Brake according to claim 3,
**characterised in that**
the cam disk (13) which is not connected to the spindle (9) is driven.

5. Brake according to claim 3,
**characterised in that**
the cam disk (14) which is connected to the spindle (9) is driven.

6. Brake according to any one of the preceding claims,
**characterised in that**
the cam disk (13) which is not connected to the spindle (9) is rotatably mounted.

7. Brake according to any one of the preceding claims,
**characterised in that**
the cam disks (13, 14) have an emergency release position (III), in which the cam disks (13, 14) are closely spaced in relation to one another.

8. Brake according to any one of the preceding claims,
**characterised in that**
the cam disks (13, 14) have a service brake position (II), in which the cam disks (13, 14) are intermediately spaced in relation to one another.

9. Brake according to any one of the preceding claims,
**characterised in that**
the cam disks (13, 14) have a parking brake position (I), in which the cam disks (13, 14) are widely spaced in relation to one another.

10. Brake according to any one of the preceding claims,
**characterised in that**
rolling elements (15) are provided between the cam disks (13, 14).

11. Brake according to any one of the preceding claims,
**characterised in that**
the cam disks (13, 14) are axial cam disks.

12. Brake according to claim 8,
**characterised in that**
in the service brake position (21) of the cam disks (13, 14) a torque (M_{K}) acts which seeks to bring about a rotation of the cam disks (13, 14) relative to one another in the direction of the emergency release position (III).

13. Brake according to claim 9,
**characterised in that**
in the parking brake position (II), no torque (M_{K}) acts which seeks to produce a rotation of the cam disks (13, 14) relative to one another.

14. Brake according to any one of the preceding claims,
**characterised in that**
the inclination of the cam disks (13, 14) in the service brake position (II) is configured such that the torque (M_{K}) generated by the application force (F_{Z}) is substantially lower than the breakaway torque (M_{L}) of the spindle (9).

15. Brake according to any one of the preceding claims,
**characterised in that**
the inclination of a cam segment (25) adjacent to the parking brake position (I) is chosen such that the torque generated by the cam disks (13, 14) is significantly higher than the breakaway torque (M_{L}) of the spindle (9).

16. Brake according to any one of the preceding claims,
**characterised in that**
the inclination of a cam segment (24) adjacent to the emergency release position (III) is chosen such that the torque (M_{K}) generated by the cam disks (13, 14) is greater than the breakaway torque (M_{S}) of the spindle (9).

17. Brake according to any one of the preceding claims,
**characterised in that**
a pretensioning device (30a-30c) is provided by means of which the two cam disks (13, 14) are pretensioned relative to one another in the direction of the emergency release position (III).

18. Brake according to claim 17,
**characterised in that**
the pretensioning device comprises at least one spring element (30a-30c).

19. Brake according to any one of the preceding claims,
**characterised in that**
in the service brake position (II), a position regulation is executed in respect of the cam position.

20. Brake according to any one of the preceding claims,
**characterised in that**
the readjustment device (7) comprises a wedge element (8), by means of which the application force (F_{Z}) of the brake is deflected.

21. Brake according to claim 20,
**characterised in that**
the wedge element (8) slides on a plate (6).

22. Brake according to claim 20,
**characterised in that**
the wedge element (8) interacts with a thrust-bearing element (10) which likewise has a wedge face (27).

23. Brake according to claim 4 or 5,
**characterised in that**
an arresting or braking device (35, 36) is provided for the cam disk (13, 14) which is not driven.

24. Brake according to claim 23,
**characterised in that**
the arresting or braking device (35, 36) comprises an electromagnet (35).

25. Brake according to any one of the preceding claims,
**characterised in that**
only a single motor (16) is provided for actuating both the readjustment device (7) and the emergency release device (12).

26. Brake according to any one of the preceding claims,
**characterised in that**
the brake is a self-energising brake.

27. Brake according to any one of the preceding claims,
**characterised in that**
the actuator (15) provided is an electric actuator.

## Revendications

1. Frein, en particulier pour véhicules automobiles, comprenant un organe de friction (1) qui peut être serré contre la surface de friction d'un élément à freiner (3) ou en être écarté au moyen d'un actionneur (15),
**caractérisé**
**par** un dispositif de rattrapage (7) comprenant une broche (9) et un élément réglable (8) entraîné par la broche (9), et
par un dispositif de relâchement d'urgence (12) comportant deux disques à came (13, 14) pouvant être animés d'un mouvement de rotation l'un par rapport à l'autre, l'un des disques (14) étant solidaire en rotation de la broche (9).

2. Frein selon la revendication 1,
**caractérisé en ce que**
le dispositif de rattrapage (7) et le dispositif de relâchement d'urgence (12) sont disposés en série sur une chaîne d'exercice de forces de la force de serrage (F_{Z}) ou d'une force (F_{Q}) dérivée de celle-ci.

3. Frein selon la revendication 1 ou la revendication 2,
**caractérisé en ce que**
l'un des disques à came (13, 14) est entraîné par un moteur.

4. Frein selon la revendication 3,
**caractérisé en ce que**
le disque à came entraîné (13) est celui qui n'est pas couplé à la broche (9).

5. Frein selon la revendication 3,
**caractérisé en ce que**
le disque à came (14) entraîné est celui qui est couplé à la broche (9).

6. Frein selon l'une des revendications précédentes,
**caractérisé en ce que**
le disque à came (13) qui n'est pas couplé à la broche (9) est monté à rotation.

7. Frein selon l'une des revendications précédentes,
**caractérisé en ce que**
les disques à came (13, 14) présentent une position de relâchement d'urgence (III) dans laquelle les disques à came (13, 14) se trouvent à une faible distance l'un de l'autre.

8. Frein selon l'une des revendications précédentes,
**caractérisé en ce que**
les disques à came (13, 14) présentent une position de freinage de service (II) dans laquelle les disques à came (13,14) se trouvent à une distance intermédiaire l'un de l'autre.

9. Frein selon l'une des revendications précédentes,
**caractérisé en ce que**
les disques à came (13, 14) présentent une position de frein de stationnement (I) dans laquelle les disques à came (13, 14) se trouvent à une grande distance l'un de l'autre.

10. Frein selon l'une des revendications précédentes,
**caractérisé en ce que**
des corps de roulement (15) sont prévus entre les disques à came (13, 14).

11. Frein selon l'une des revendications précédentes,
**caractérisé en ce**
les disques à came (13, 14) sont de type axial.

12. Frein selon la revendication 8,
**caractérisé en ce**
dans la position de frein de service (11), les disques à came (13, 14) subissent un couple de rotation (M_{K}) qui tend à provoquer une rotation antagoniste des disques à came (13, 14) dans le sens de la position de relâchement d'urgence (III).

13. Frein selon la revendication 9,
**caractérisé en ce que**
dans la position de frein de stationnement (I), les disques à came (13, 14) ne subissent aucun couple de rotation (M_{K}) qui tend à provoquer une rotation antagoniste des disques à came (13, 14).

14. Frein selon l'une des revendications précédentes,
**caractérisé en ce que**
la montée du disque à came (13, 14) dans la position de frein de service (II) est conçue de telle façon que le couple (M_{K}) engendré par la force de serrage (F_{Z}) est nettement inférieur au couple de rupture de relâchement (M_{L}) de la broche (9).

15. Frein selon l'une des revendications précédentes,
**caractérisé en ce que**
la montée d'un segment de came (25) voisin de la position de frein de stationnement (I) est choisie de telle façon que le couple engendré par les disques à came (13, 14) est nettement supérieur au couple de rupture de relâchement (M_{L}) de la broche (9).

16. Frein selon l'une des revendications précédentes,
**caractérisé en ce que**
la montée d'un segment de came (24) voisin de la position de relâchement d'urgence (III) est choisie de telle façon que le couple (M_{K}) engendré par les disques à came (13, 14) est supérieur au couple de rupture de relâchement (M_{L}) de la broche (9).

17. Frein selon l'une des revendications précédentes,
**caractérisé en ce qu'**
il est prévu un dispositif de précontrainte (30a-30c) au moyen duquel les deux disques à came (13, 14) sont précontraints l'un par rapport à l'autre en direction de la position de relâchement d'urgence (III).

18. Frein selon la revendication 17,
**caractérisé en ce que**
le dispositif de précontrainte comprend au moins un élément à ressort (30a-30c).

19. Frein selon l'une des revendications précédentes,
**caractérisé en ce que**
dans la position de frein de service (II), on effectue un réglage de position visant la position des disques.

20. Frein selon l'une des revendications précédentes,
**caractérisé en ce que**
le dispositif de rattrapage (7) comprend un élément en forme de coin (8) au moyen duquel la force de serrage (F_{Z}) du frein est déviée.

21. Frein selon la revendication 20,
**caractérisé en ce que**
l'élément en forme de coin (8) glisse sur une plaque (6).

22. Frein selon la revendication 20,
**caractérisé en ce que**
l'élément en forme de coin (8) coopère avec un élément formant butée antagoniste (10) qui présente également une surface de coin (27).

23. Frein selon la revendication 4 ou la revendication 5,
**caractérisé en ce qu'**
il est prévu un dispositif de maintien ou de freinage (35, 36) pour le disque à came (13, 14) qui n'est pas entraîné.

24. Frein selon la revendication 23,
**caractérisé en ce que**
le dispositif de maintien ou de freinage (35, 36) comprend un électro-aimant (35).

25. Frein selon l'une des revendications précédentes,
**caractérisé en ce qu'**
il n'est prévu qu'un seul moteur (16) pour actionner aussi bien le dispositif de rattrapage (7) que le dispositif de relâchement d'urgence (12).

26. Frein selon l'une des revendications précédentes,
**caractérisé en ce qu'**
il est du type à auto-amplification.

27. Frein selon l'une des revendications précédentes,
**caractérisé en ce que**
l'actionneur prévu (15) est un actionneur électrique.
